Europäisches Patentamt

European Patent Office

Office européen des brevets

(19)

(11) EP 0 619 475 B1

(12) FASCICULE DE BREVET EUROPEEN

(45) Date de publication et mention
de la délivrance du brevet:
**30.07.1997 Bulletin 1997/31**

(51) Int Cl.⁶: **G01F 23/24**

(21) Numéro de dépôt: **94400765.7**

(22) Date de dépôt: **08.04.1994**

(54) **Dispositif de mesure de niveau et/ou de volume de liquide à fil résistif immergé**

Vorrichtung zur Messung des Niveaus und/oder des Volumens einer Flüssigkeit mit einem Tauchwiderstandsdraht

Device for the measurement of the level and/or the volume of a liquid using an immersed resistance wire

(84) Etats contractants désignés:
**DE ES GB IT SE**

(30) Priorité: **09.04.1993 FR 9304280**

(43) Date de publication de la demande:
**12.10.1994 Bulletin 1994/41**

(73) Titulaire: **MAGNETI MARELLI FRANCE**
**92000 Nanterre (FR)**

(72) Inventeurs:
• **Bezard, Jean-Jacques**
**F-78400 Chatou (FR)**
• **Marteau, Bernard**
**F-91430 Igny (FR)**

(74) Mandataire: **Martin, Jean-Jacques et al**
**Cabinet REGIMBEAU**
**26, Avenue Kléber**
**75116 Paris (FR)**

(56) Documents cités:
**EP-A- 0 210 509**   **EP-A- 0 240 598**
**EP-A- 0 446 418**   **DE-A- 4 016 970**

## Description

La présente invention concerne la détection du niveau d'un liquide.

La Demanderesse a déjà proposé dans le brevet français publié sous le n° 2367276, un dispositif permettant le contrôle du niveau de liquide contenu dans un réservoir. Ce dispositif comporte une sonde résistive partiellement immergée dans le liquide, des moyens d'alimentation capables d'appliquer de l'énergie électrique à ladite sonde, des moyens sensibles à l'une au moins des grandeurs électriques tension et courant dans la sonde, et des moyens pour surveiller l'évolution de ladite grandeur à partir de sa valeur initiale, au début de l'application d'énergie électrique, afin d'en déduire des informations sur le niveau de liquide. L'indication de niveau obtenue selon ce brevet antérieur est assez fiable pour permettre par exemple une alerte lorsqu'un seuil de niveau est atteint.

La Demanderesse a ensuite proposé de nombreux perfectionnements à ce dispositif.

Elle a en particulier proposé dans le brevet français publié sous le n° 2514497, un dispositif de type illustré sur la figure 1 annexée, qui comporte :

- un générateur de tension constante +E,
- un commutateur C,
- une première branche formant pont diviseur comprenant en série une sonde S et une résistance R de valeur connue,
- une seconde branche, connectée en parallèle de la première, comprenant deux résistances R50 et R51 connectées en série pour former un second pont diviseur,
- un convertisseur analogique/numérique CAN,
- un microprocesseur MP,
- un module d'affichage VS, et
- un module d'alarme AL.

Le fonctionnement de ce dispositif est essentiellement le suivant.

La tension notée +E est appliquée par l'intermédiaire du commutateur C, sous le contrôle du microprocesseur MP, à l'ensemble série constitué de la résistance R de valeur connue et de la sonde S ainsi qu'à l'ensemble série constitué des deux résistances R50 et R51. La tension U aux bornes de la sonde S est mesurée à l'aide du convertisseur analogique-numérique CAN relié au microprocesseur MP.

Il en est de même pour la tension de référence $U_r$ prélevée au point commun entre les deux résistances R50 et R51, dont la valeur est directement reliée à la variation éventuelle de la tension d'alimentation +E.

Plus précisément à la fermeture du contact C, le microprocesseur MP mesure et mémorise la tension de référence $U_r$ et la tension $U_0$ qui est égale à la tension initiale aux bornes de la sonde S. Ensuite et dans un temps très bref le microprocesseur démarre un comptage de temps. Le microprocesseur surveille également si la tension U devient ou non égale à la tension de référence $U_r$. Tant que l'égalité n'est pas atteinte, le microprocesseur reste en position d'attente par couplage sur ce test.

Au contraire, lorsque l'égalité est obtenue, le microprocesseur arrête le comptage de temps, tout en ouvrant l'interrupteur C, et en mémorisant le temps t en cours.

Le microprocesseur recherche alors dans une table principale le niveau numérique correspondant à la valeur numérique du temps t. Puis le microprocesseur affiche le niveau.

La présente invention propose maintenant de perfectionner encore les dispositifs existants.

Ce but est atteint dans le cadre de la présente invention grâce à un dispositif du type comprenant :

- une sonde résistive partiellement immergée dans le liquide,
- des moyens d'alimentation capables d'appliquer de l'énergie électrique à ladite sonde,
- des moyens sensibles à l'une au moins des grandeurs électriques tension et courant dans la sonde, et
- des moyens pour surveiller l'évolution de ladite grandeur afin d'en déduire des informations sur le niveau de liquide,

caractérisé par le fait que les moyens de surveillance sont adaptés pour mesurer au moins deux grandeurs différentielles représentatives de l'évolution de ladite grandeur et sont adaptés pour définir le niveau de liquide, en exploitant ces deux grandeurs différentielles, à l'aide d'une relation basée sur le coefficient d'échange thermique de la sonde dans le liquide et sur le coefficient d'échange thermique de la sonde dans l'air.

D'autres caractéristiques, buts et avantages de la présente invention apparaîtront à la lecture de la description détaillée qui va suivre, et en regard des dessins annexés sur lesquels :

- la figure 1 précédemment décrite représente un dispositif de mesure conforme à l'état de la technique,
- la figure 2 représente un dispositif de mesure conforme à la présente invention,

- la figure 3A représente la réponse en tension d'une sonde, à un créneau d'alimentation en courant représenté sur la figure 3B,
- la figure 4A représente la réponse en tension d'une sonde à une séquence de créneaux d'alimentation représentés sur la figure 4B,
- la figure 5 illustre une variante de mesure conforme à la présente invention,
- la figure 6 illustre un organigramme de mesure conforme à la présente invention,
- la figure 7 représente une variante de dispositif de mesure conforme à la présente invention,
- les figures 8 et 9 représentent deux variantes de mesure conformes à la présente invention, et
- les figures 10 à 13 illustrent schématiquement des variantes de dispositif de mesure conformes à la présente invention.

## STRUCTURE GENERALE DU DISPOSITIF DE MESURE CONFORME A LA PRESENTE INVENTION

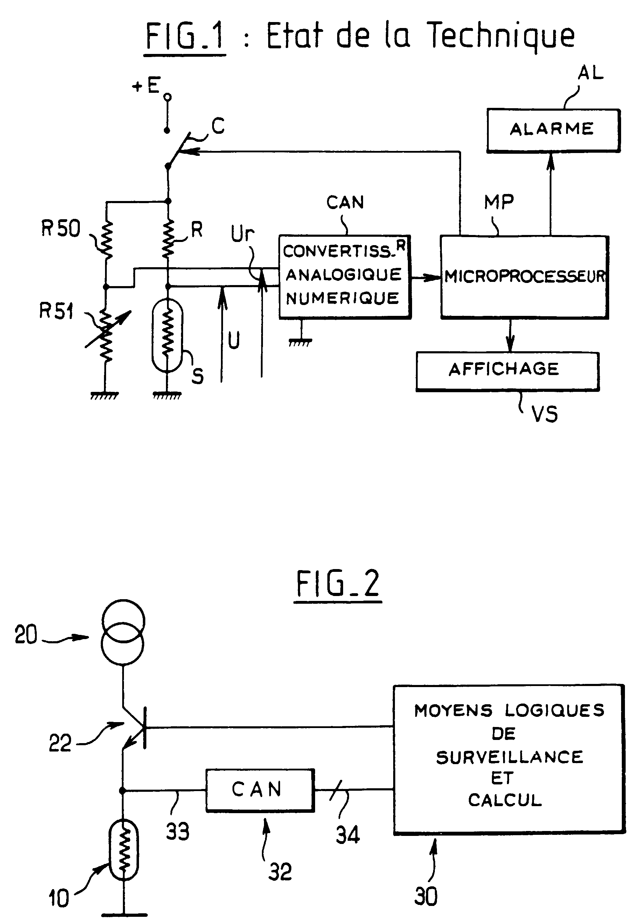

Le dispositif conforme à la présente invention, représenté sur la figure 2 annexée, comprend une sonde 10, des moyens d'alimentation électrique 20, et des moyens 30 sensibles à l'une au moins des grandeurs électriques tension et courant dans la sonde 10.

La sonde 10 est une sonde résistive, à coefficient de température non nul de préférence sous forme d'un fil. Elle est partiellement immergée dans le liquide. De préférence, la sonde 10 est positionnée dans une direction générale non horizontale, avantageusement sur toute la hauteur du carter ou du réservoir contenant le liquide ou au moins une majeure partie de cette hauteur, pour permettre de mesurer le niveau de liquide sur toute la hauteur du carter ou réservoir, ou au moins une majeure partie de celle-ci. Toutefois, en variante la sonde 10 peut être placée horizontalement. Dans ce cas le dispositif permet la détection du franchissement, par le liquide, du seuil de niveau correspondant à la sonde.

La Demanderesse a déjà commercialisé de nombreuses sondes aptes à être utilisées dans le cadre de la présente invention. Pour cette raison, la sonde 10 ne sera pas décrite plus en détail par la suite.

Les moyens d'alimentation électrique 20 peuvent faire l'objet de diverses variantes de réalisation.

Ces moyens 20 peuvent être formés d'une source de tension constante.

Cependant, selon le mode de réalisation préférentiel représenté sur la figure 2, les moyens d'alimentation électrique 20 sont formés d'une source de courant constant.

La source de courant 20 est de préférence reliée à la sonde 10 par l'intermédiaire d'un interrupteur 22. Cet interrupteur 22 est contrôlé pa les moyens 30. Il est formé avantageusement d'un transistor, comme représenté sur la figure 2.

Les moyens 30 sont non seulement sensibles à l'une au moins des grandeurs électriques tension et courant dans la sonde 10, mais sont également adaptés pour surveiller l'évolution de ladite grandeur électrique afin d'en déduire des informations sur le niveau de liquide.

Plus précisément encore, dans le cadre de la présente invention, comme indiqué précédemment, les moyens 30 sont adaptés pour mesurer au moins deux grandeurs différentielles représentatives de l'évolution de ladite grandeur. En outre les moyens 30 sont adaptés pour définir le niveau de liquide en exploitant une relation basée sur le coefficient d'échange thermique de la sonde dans le liquide et sur le coefficient d'échange thermique de la sonde dans l'air, relation dans laquelle on utilise lesdites grandeurs différentielles.

Les moyens 30 sont de préférence des moyens numériques contrôlés par un microprocesseur.

A cet effet, un convertisseur analogique/numérique 32 est de préférence intercalé entre la sonde 10 et les moyens 30. Plus précisément l'entrée analogique 33 du convertisseur 32 est reliée à la sonde 10, tandis que sa sortie numérique 34 est reliée aux moyens 30.

## REPONSE DE LA SONDE

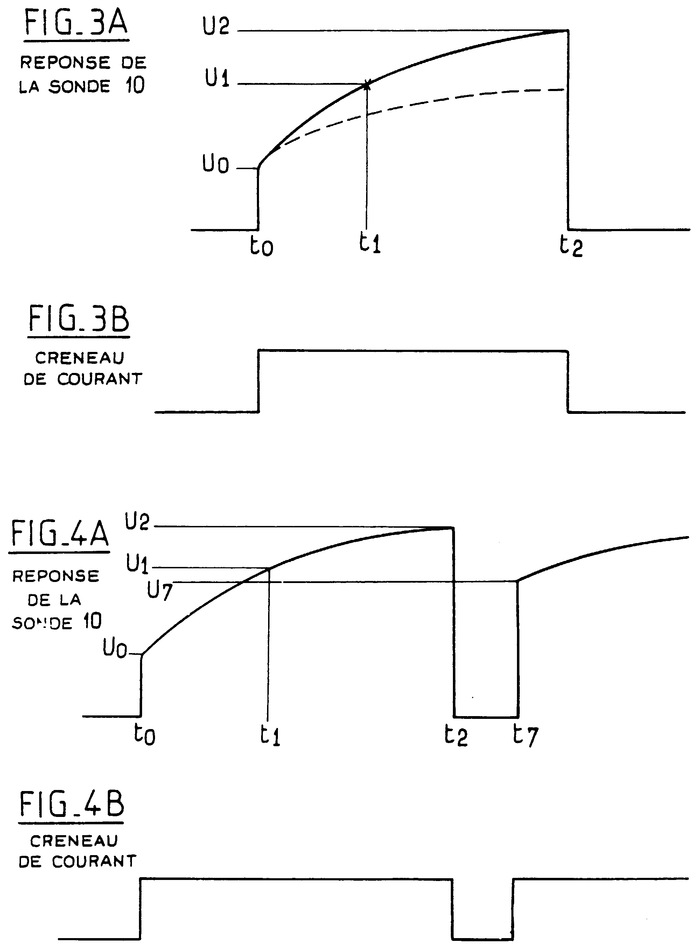

On a représenté sur la figure 3A, en trait continu la réponse en tension de la sonde 10 dans l'air (correspondant à un niveau minimal de liquide), et en traits interrompus la réponse de la même sonde 10 dans le liquide (correspondant à un niveau maximal de liquide), suite à un créneau de courant constant d'excitation issu de la source 20, comme représenté sur la figure 3B.

La Demanderesse a démontré que

$$(U_1-U_0)=(\alpha'\rho^2 l^{3/}s^2 p)[(h/KH)(1-e^{-KHpt1/\gamma s})+(l-h)(1-e^{-KApt1/\gamma s})/KA]$$

$$= (\alpha'\rho^2 l^3 l/s^2 pKA)[(x/\alpha)(1-e^{-\alpha t1/\tau})+(1-x)(1-e^{-t1/\tau})] \qquad (1)$$

Avec :

$U_0$ = tension mesurée aux bornes de la sonde 10 à l'origine to du créneau de courant,

$U_1$ = tension mesurée aux bornes de la sonde 10 à un instant t1 pendant le créneau de courant,

$\alpha'$ = coefficient de variation de la résistivité du fil de la sonde 10, avec la température,

$\rho$ = résistivité du fil de la sonde 10 à la température nominale,

I = intensité du courant issu de la source 20,

s = section du fil de la sonde 10,

p = périmètre du fil de la sonde 10,

h = hauteur immergée du fil de la sonde 10,

l = longueur totale du fil de la sonde 10,

KH = coefficient d'échange thermique du fil de la sonde 10, dans le liquide,

KA = coefficient d'échange thermique du fil de la sonde 10, dans l'air,

$\gamma$ = capacité thermique du fil de la sonde 10,

x = h/l

$\alpha$ = KH/KA

$\tau$ = $\gamma$d/4KA

Pour un fil de sonde 10 de section circulaire, la relation (1) devient :

$$(U_1-U_0)= (16\alpha'\rho^2 I^3/\pi^3 d^5)[(h/KH)(1-e^{-4KHt1/\gamma d})+(l-h)(1-e^{-4KAt1/\gamma d})/KA]=$$

$$(16\alpha'\rho^2 I^3 l/\pi^3 d^5 KA)[(x/\alpha)(1-e^{-\alpha t1/\tau})+(1-x)(1-e^{-t1/\tau})] \tag{2}$$

avec d = diamètre du fil de la sonde 10.

De même en appelant $U_2$ la tension mesurée aux bornes de la sonde 10 à un instant t2 pendant le créneau de courant, on a :

$$(U_2-U_1)= (\alpha'\rho^2 I^3 l/s^2 pKA)[(x/\alpha)(e^{-\alpha t1/\tau}-e^{-\alpha t2/\tau})+(1-x)(e^{-t1/\tau}-e^{-t2/\tau})] \tag{3}$$

soit si l'on appelle T21 = t2 - tl

$$(U_2-U_1)= (\alpha'\rho^2 I^3 l/s^2 pKA)[(x/\alpha)e^{-\alpha t1/\tau}(1-e^{-\alpha T21/\tau})+(1-x)e^{-t1/\tau}(1-e^{-T21/\tau})] \tag{4}$$

Si comme représenté sur la figure 4B, la source 20 applique à la sonde 10 une suite de créneaux de courant, en appelant $U_2$ la tension mesurée aux bornes de la sonde 10 à la fin du premier créneau de courant, $U_7$ la tension mesurée aux bornes de la sonde 10 à l'origine t7 du second créneau de courant (voir figure 4A), on a :

$$(U_2-U_7)= (\alpha'\rho^2 I^3 l/s^2 pKA)[(x/\alpha)(1-e^{-\alpha t2/\tau})e^{-\alpha t7/\tau}+(1-x)(1-e^{-t2/\tau})e^{-t7/\tau}] \tag{5}$$

Les formules indiquées ci-dessus sont des formules approchées de la réponse exacte de la sonde.

En pratique, le dispositif conforme à la présente invention peut donc exploiter des formules plus précises. En particulier, on peut affiner la définition du paramètre $\alpha'$ en fonction de la température.

Par la suite, on appellera :

$$Umax = \alpha'\rho^2 I^3 l/s^2 pKA$$

## LES GRANDEURS DIFFERENTIELLES EXPLOITEES

Les grandeurs différentielles exploitées dans le cadre de la présente invention peuvent être obtenues de diverses façons.

Une grandeur différentielle peut correspondre à une différence entre deux grandeurs électriques, par exemple une différence entre deux tensions $(U_1-U_0)$, mesurées sur la sonde 10 à des instants t1, t0 prédéfinis.

Une grandeur différentielle peut correspondre à l'écart de temps (t2-t1) séparant le franchissement de deux niveaux prédéfinis par la grandeur électrique, par exemple deux niveaux de tension prédéfinis $U_2$, $U_1$.

Une grandeur différentielle peut correspondre à une dérivée $\Delta U/\Delta t$ de la grandeur électrique mesurée.

Une autre grandeur différentielle peut correspondre à la mesure du $\Delta t$ correspondant à l'évolution $\Delta U$ de la grandeur électrique sur un écart prédéterminé.

Les modalités d'exploitation des grandeurs différentielles par les moyens 30 peuvent également faire l'objet de diverses variantes.

Les moyens 30 peuvent ainsi exploiter un rapport entre deux grandeurs différentielles, tel que $(U_2-U_0)/(U_1-U_0)$.

Les moyens 30 peuvent aussi exploiter une relation connue entre deux grandeurs différentielles, telle que $(U_2-U_0) = K(U_1-U_0)$.

Les moyens 30 peuvent encore déduire le niveau de liquide, par résolution d'un système d'équations tel que $(U_2-U_0)/(U_1-U_0)$ et $(U_2-U_1)/(U_1-U_0)$. Dans ce cas de préférence chaque équation met elle-même en oeuvre un rapport entre deux grandeurs différentielles.

PREMIER EXEMPLE DE REALISATION DE L'INVENTION

Selon un premier exemple de réalisation de la présente invention, les moyens de surveillance 30 mesurent les tensions $U_0$, $U_1$ et $U_2$ aux bornes de la sonde 10, à des instants prédéfinis t0, t1 et t2 du créneau de courant issu de la source 20, comme schématisé sur la figure 3A.

Une fois ces mesures obtenues, les moyens 30 peuvent calculer deux grandeurs différentielles telles que : $(U_2-U_0)$ et $(U_1-U_0)$.

Sachant que :

$$(U_2-U_0)=Umax[((x/\alpha)(1-e^{-\alpha t2/\tau})+(1-x)(1-e^{-t2/\tau})] \qquad (6)$$

et

$$(U_1-U_0)=Umax[(x/\alpha)(1-e^{-\alpha t1/\tau})+(1-x)(1-e^{-t1/\tau})] \qquad (7),$$

les moyens 30 peuvent déduire l'information x représentative du niveau de liquide à partir du rapport $(U_2-U_0)/(U_1-U_0)$ du fait que $\alpha$ et $\tau$ sont des constantes connues du dispositif.

Selon des variantes du premier exemple, la même information x peut être obtenue à partir des rapport $(U_2-U_0)/(U_2-U_1)$ ou $(U_2-U_1)/(U_1-U_0)$ sachant que :

$$(U_2-U_1)=U_{max}[((x/\alpha)(e^{-\alpha t1/\tau}-e^{-\alpha t2/\tau})+(1-x)(e^{-\alpha t1/\tau}-e^{-\alpha t2/\tau})] \qquad (8)$$

DEUXIEME EXEMPLE DE REALISATION DE L'INVENTION

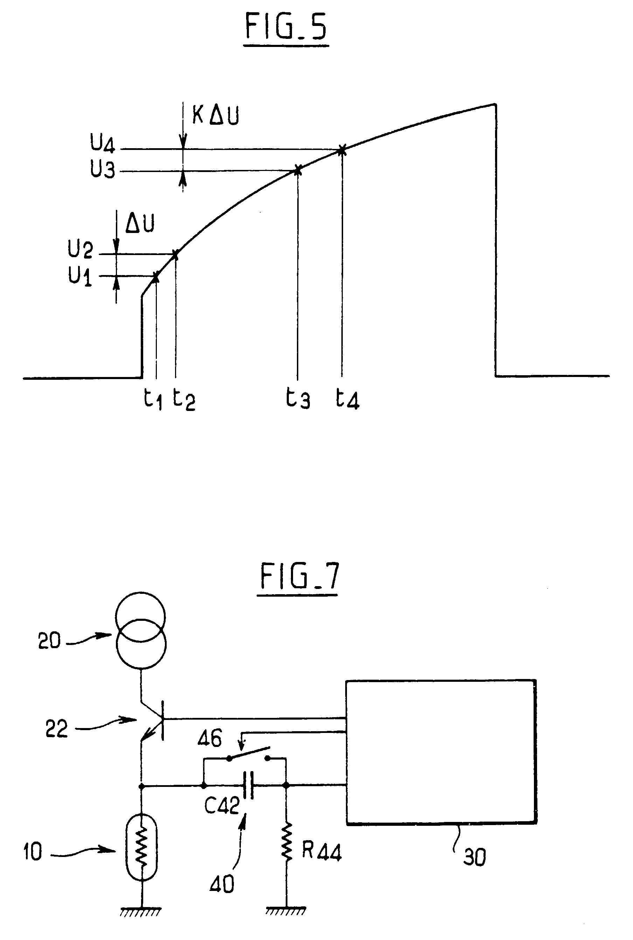

Selon un second exemple de réalisation de la présente invention, les moyens de surveillance 30 mesurent les instants t1, t2, t3 et t4 de franchissement de niveaux de tension prédéfinis U1, U2, U3 et U4 aux bornes de la sonde 10, comme schématisé sur la figure 5, tels que (U2-U1)=K(U4-U3), K étant une grandeur connue.

Les moyens 30 peuvent alors déduire l'information x représentative du niveau de liquide, de cette équation, sachant que :

$$(U2-U1)=Umax[(x/\alpha)(e^{-\alpha t1/\tau}-e^{-\alpha t2/\tau})+(1-x)(e^{-t1/\tau}-e^{-t2/\tau})] \qquad (9)$$

et

$$(U4-U3)=Umax[(x/\alpha)(e^{-\alpha t3/\tau}-e^{-\alpha t4/\tau})+(1-x)(e^{-t3/\tau}-e^{-t4/\tau})] \qquad (10)$$

ou encore en posant
T21 = t2-t1 et T43 = t4-t3 :

$$(U2-U1)=Umax[(x/\alpha)e^{-\alpha t1/\tau}(1-e^{-\alpha T21/\tau})+(1-x)e^{-t1/\tau}(1-e^{-T21/\tau})] \qquad (11)$$

et

$$(U4-U3)=Umax[(x/\alpha)e^{-\alpha t3/\tau}(1-e^{-\alpha T43/\tau})+(1-x)e^{-t3/\tau}(1-e^{-T43/\tau})] \qquad (12)$$

En pratique, la mesure des instants t1, t2, t3, t4, de franchissement des niveaux de tension prédéfinis U1, U2, U3 et U4 peut être obtenue en détectant le basculement de bits particuliers en sortie du convertisseur analogique/numérique 32.

Plus précisément, si l'on prend K=1, la mesure des instants t1, t2, t3, t4 peut être obtenue en détectant le basculement d'un bit de poids (U2-U1)=(U4-U3) en sortie du convertisseur 32.

Cette disposition présente l'intérêt de garantir une grande précision de mesure puisqu'elle exploite toujours le même bit de sortie du convertisseur 32.

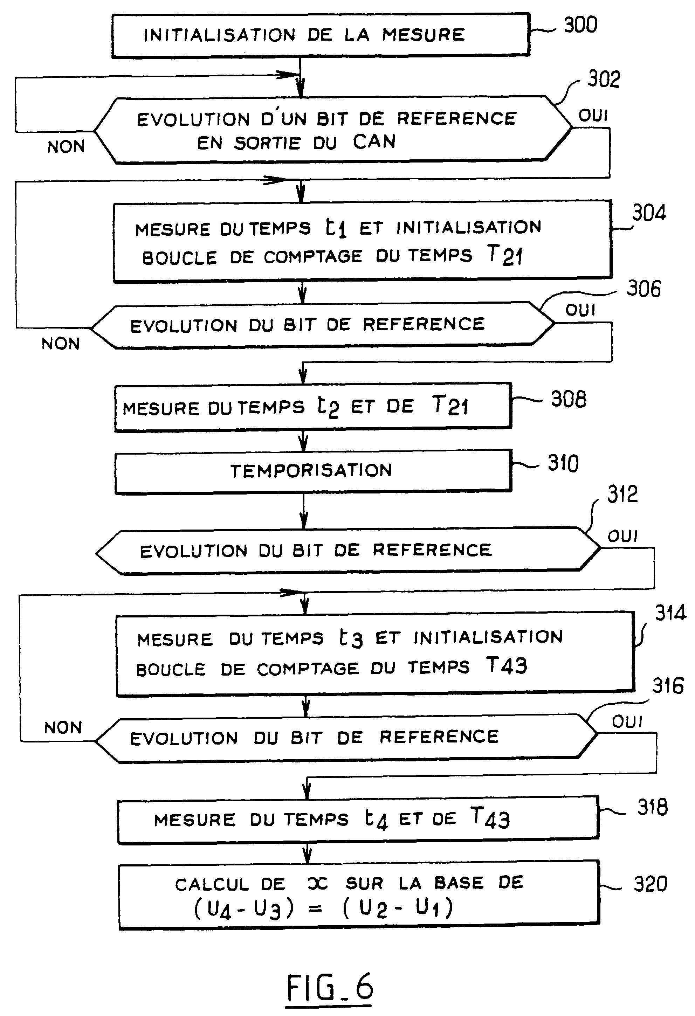

L'organigramme correspondant du processus mis en oeuvre par les moyens 30 est schématisé sur la figure 6, pour le cas où K=1.

Après l'étape 300 d'initialisation de la mesure, c'est-à-dire d'initialisation du créneau de courant d'alimentation issu de la source 20, les moyens 30 scrutent l'évolution d'un bit de référence de poids adéquat en sortie du convertisseur 32, à l'étape 302.

Lorsque cette évolution apparaît à l'étape 304, les moyens 30 mesurent le temps t1.

Les moyens 30 scrutent ensuite à l'étape 306 une nouvelle évolution du même bit de référence à la sortie du convertisseur 32.

Lorsque cette nouvelle évolution apparaît à l'étape 308, les moyens 30 mesurent le temps t2.

A l'étape 310 les moyens 30 opèrent une temporisation.

Puis à l'étape 312 les moyens 30 reprennent l'opération de scrutation de l'évolution du bit de référence en sortie du convertisseur 32.

Lorsque cette évolution apparaît à l'étape 314, les moyens 30 mesurent le temps t3.

Les moyens 30 scrutent ensuite à l'étape 316 une nouvelle évolution du même bit de référence à la sortie du convertisseur 32.

Lorsque cette nouvelle évolution apparaît à l'étape 318, les moyens 30 mesurent le temps t4.

Les moyens 30 sont alors en mesure de calculer x sur la base de la relation (U4-U3)=(U2-U1), sachant que t1, t2, t3 et t4 sont connus.

Selon une autre variante du seconde exemple de réalisation de l'invention, on peut prendre U3=U1.

La relation exploitée par les moyens 30 devient alors (U2-U1)=K(U4-U1) soit en posant T21=t2-t1 et T41=t4-t1 :

$$(x/\alpha)(1-e^{-\alpha T21/\tau})+(1-x)(1-e^{-T21/\tau}) =$$

$$K[(x/\alpha)(1-e^{-\alpha T41/\tau}) + (1-x)(1-e^{-T41/\tau})] \qquad (13)$$

## TROISIEME EXEMPLE DE REALISATION DE L'INVENTION

Selon un troisième exemple de réalisation de la présente invention, les moyens 30 exploitent des grandeurs différentielles formées par les dérivées $\Delta u/dt$ de la réponse de la sonde.

Ces dérivées peuvent être obtenues par calcul numérique à partir du signal issu du convertisseur 32.

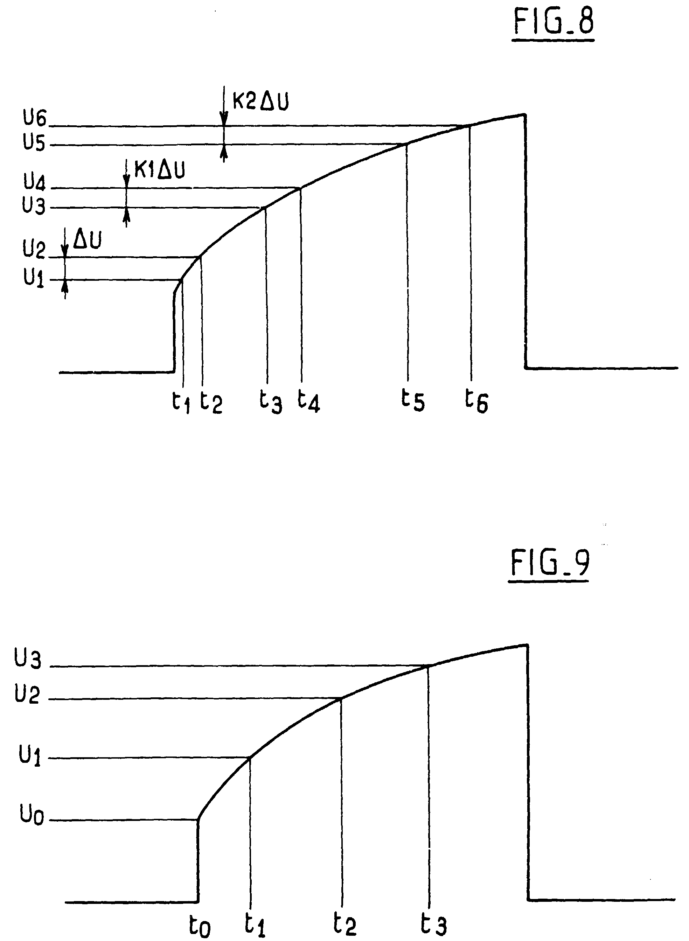

Ces dérivées peuvent encore être obtenues à l'aide d'un dérivateur analogique 40, comme schématisé sur la figure 7.

Selon le schéma de la figure 7, le dérivateur 40 comprend une capacité série C42 connectée entre la sonde et une entrée des moyens 30, et une résistance parallèle R44 qui relie la sortie du dérivateur à la masse.

De préférence comme représenté sur la figure 7 la capacité C42 peut être court-circuitée temporairement par la fermeture d'un interrupteur parallèle 46 piloté par les moyens 30, à l'origine et à la fin du créneau de courant, pour supprimer les pointes du signal de dérivation.

Bien entendu le dérivateur représenté sur la figure 7 peut être perfectionné sous forme d'un dérivateur actif, par exemple articulé autour d'un amplificateur opérationnel.

Une fois les dérivées précitées obtenues les moyens 30 peuvent par exemple exploiter leur rapport. On a en effet si l'on appelle A la dérivée obtenue à l'instant t1 et B la dérivée obtenue à l'instant t2 :

$$A/B = (x\ e^{-\alpha t1/\tau} + (1-x)e^{-t1/\tau})/(x\ e^{-\alpha t2/\tau} + (1-x)e^{-t2/\tau}) \tag{14}$$

Selon encore une autre variante, pour permettre de s'affranchir de la section, du périmètre, voire du diamètre, du fil de la sonde 10 qui peuvent ne pas être connus avec précision, les moyens 30 peuvent exploiter non pas deux dérivées, mais trois dérivées, par exemple la dérivée A à l'origine t0 du créneau de courant, la dérivée B à un instant t3 et la dérivée C à un instant t5. Ces trois dérivées A, B et C permettent d'obtenir :

$$m = B/A = x\ e^{-\alpha t3/\tau} + (1-x)\ e^{-t3/\tau} \tag{15}$$

et

$$n = C/A = x\ e^{-\alpha t5/\tau} + (1-x)\ e^{-t5/\tau} \tag{16}$$

Le système de deux équations (15) et (16) à deux inconnues x et $\tau$ peut être résolu par approches successives ou encore par calcul direct sachant que B/A, C/A, $\alpha$, t1 et t2 sont connues.

On a évoqué précédemment la possibilité d'obtenir les dérivées par calcul numérique sur la réponse de la sonde ou par dérivation analogique. En variante, on peut obtenir une information similaire en mesurant les instants t1, t2, t3, t4, t5 et t6 de franchissement de niveaux prédéfinis, U1, U2, U3, U4, U5 et U6 tels que (U4-U3)=K1(U6-U5)=K2(U2-U1), comme schématisé sur la figure 8.

En pratique, on prendra de préférence K1=K2=1 afin de mesurer les temps t1, t2, t3, t4, t5 et t6 aux instants de basculement d'un même bit de référence en sortie du convertisseur 32.

On a alors :

$$B/A = (t2-t1)/(t4-t3)$$

et

$$C/A = (t2-t1)/(t6-t5).$$

Les rapports entre différences de temps permettent donc de résoudre directement le système d'équations (15) et (16).

Plus précisément, seuls les temps t1, t2, t3 et t4 ou t3, t4, t5 et t6 seront mesurés si $\tau$ étant connue on souhaite seulement résoudre l'équation (14). En revanche, si $\tau$ est inconnue et que l'on souhaite résoudre le système d'équation (15) et (16) il convient de mesurer t1, t2, t3, t4, t5 et t6 pour permettre l'obtention de B/A et C/A.

Il convient également de noter que si t1 diffère de t0, les équations (15) et (16) peuvent être affinées sous la forme :

$$m = B/A = (x\ e^{-\alpha t3/\tau} + (1-x)\ e^{-t3/\tau})/(x\ e^{-\alpha t1/\tau} + (1-x)\ e^{-t1/\tau})$$

et

$$n = C/A = (x\ e^{-\alpha t5/\tau} + (1-x)\ e^{-t5/\tau})/(x\ e^{-\alpha t1/\tau} + (1-x)\ e^{-t1/\tau}).$$

## QUATRIEME EXEMPLE DE REALISATION DE LA PRESENTE INVENTION

Selon un quatrième exemple de réalisation de la présente invention, les moyens 30 peuvent mesurer quatre tensions U0, U1, U2 et U3 à des instants t0, t1, t2 et t3 prédéfinis, comme schématisé sur la figure 9.

Ces quatres mesures permettent d'obtenir trois grandeurs différentielles telles que (U1-U0), (U2-U0) et (U3-U0) ou toute autre combinaison de U0, U1, U2 et U3.

Les moyens 30 peuvent alors déduire le niveau de liquide à partir de ces grandeurs différentielles, selon diverses modalités telles que :

- calcul direct à partir des équations de ces trois grandeurs différentielles,
- résolution du système d'équations par approches successives, ou
- établissement de deux rapports tels que (U2-U0)/(U1-U0) et (U3-U0)/(U1-U0) pour obtenir deux équations à deux inconnues : $\tau$ et x pouvant être obtenues par calcul.

## CINQUIEME EXEMPLE DE REALISATION DE LA PRESENTE INVENTION

Ce cinquième exemple de réalisation s'applique au cas ou l'on souhaite éliminer des calculs la section ou le périmètre du fil de la sonde 10, voire le diamètre de celle-ci.

Pour cela, les moyens 30 peuvent mesurer les tensions U0, U1 et U2 à l'origine t0 et à deux instants prédéterminés t1 et t2.

On obtient alors deux grandeurs différentielles telles que (U1-U0) et (U2-U0) ou (U1-U0) et (U2-U1) qui donnent un système de deux équations à deux inconnues : $\tau$ et x, pouvant être résolu par toute méthode de calcul adéquate.

## SIXIEME EXEMPLE DE REALISATION DE LA PRESENTE INVENTION

Ce sixième exemple de réalisation s'applique également au cas où l'on souhaite éliminer des calculs la section ou le périmètre du fil de la sonde 10, voire le diamètre de celle-ci.

Dans le cadre de ce sixième mode de réalisation, les moyens 30 mesurent les instants t1, t2, t3 et t4 de franchissement de niveaux prédéterminées U1, U2, U3 et U4 tels que (U4-U3)=K(U2-U1).

Là encore on obtient ainsi un système de deux équations à deux inconnues qui permet de calculer le niveau de liquide par toute méthode adéquate.

En pratique on peut de préférence prendre (U4-U3)=(U2-U1).

Les instants t1, t2, t3 et t4 coïncident ainsi avec les instants de basculement d'un bit de référence en sortie du convertisseur 32. Cette disposition est avantageuse car elle donne une bonne précision de mesure.

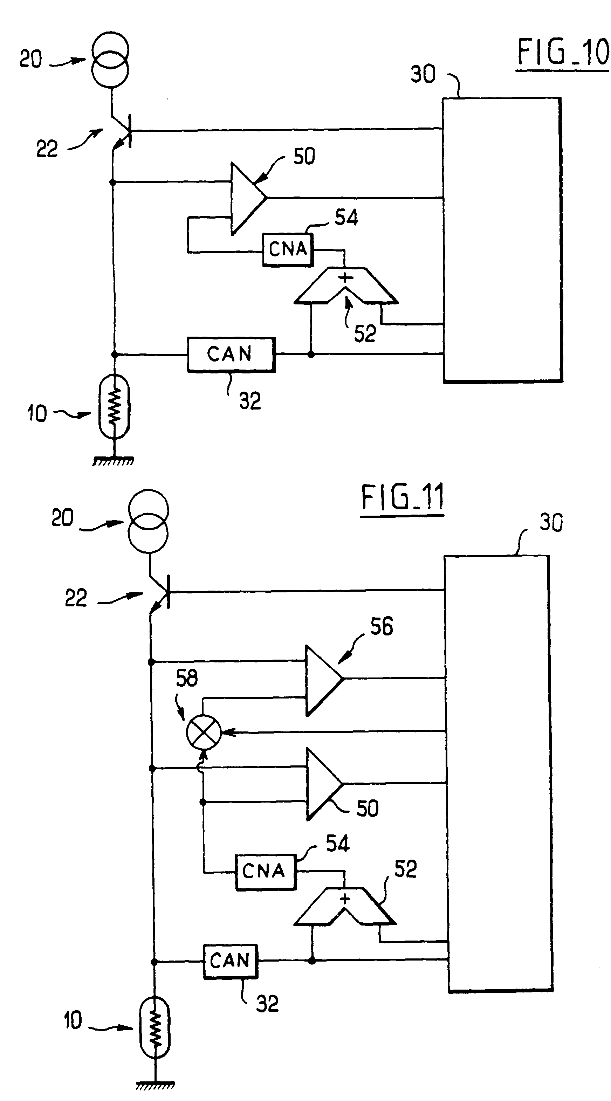

## VARIANTE DE REALISATION REPRESENTEE SUR LES FIGURES 10 A 13 (celles-ci permettent de comparer une tension évolutive U à une tension fixée sur le convertisseur).

On a décrit précédemment, en particulier en regard des figures 5, 6 et 8, des processus consistant à surveiller les évolutions successives d'un bit de référence de poids faible en sortie du convertisseur 32. Plus précisément, on a ainsi proposé de mesurer les instants de basculement du bit de référence. Cette disposition permet une mesure précise. Elle permet notamment de connaître l'écart de temps séparant un ΔU constant de la réponse de la sonde, et par conséquent la dérivée, c'est-à-dire la pente de cette réponse.

Le mode de réalisation de la figure 10 correspond à une variante de réalisation qui permet également de mesurer avec précision les écarts de temps séparant un ΔU déterminé, sans que pour autant ce ΔU corresponde exactement au poids d'un bit du convertisseur 32.

On retrouve sur la figure 10, la sonde 10, la source 20 associée à l'interrupteur 22 et les moyens 30 ainsi que le convertisseur analogique/numérique 32. Cependant le dispositif représenté sur la figure 10 comprend en outre un comparateur 50 adapté pour comparer la tension présente aux bornes de la sonde 10 avec une tension de consigne définie par les moyens 30. En pratique, la tension de consigne peut être définie dans un additionneur 52 qui reçoit d'une part sur une première entrée un signal issu du convertisseur 32 à un instant déterminé et d'autre part, sur une seconde entrée une valeur de décalage générée par les moyens 30. La sortie de l'additionneur 52 est reliée à la seconde entrée du comparateur 50 par un convertisseur numérique/analogique 54.

Bien entendu la tension de consigne appliquée au comparateur 50 peut être obtenue par tous moyens équivalents.

Le fonctionnement du dispositif représenté sur la figure 10 est le suivant.

A l'instant initial t0 du créneau d'alimentation, les moyens 30 appliquent sur la seconde entrée de l'additionneur 52, une tension d'offset Ux et maintiennent sur la première entrée de cet additionneur 52, la tension U0 présente aux bornes de la sonde.

Le comparateur 50 reçoit ainsi une tension de consigne U0+Ux.

La sortie du comparateur 50 bascule par conséquent lorsque la tension aux bornes de la sonde 10 franchit cette valeur de consigne U0+Ux. Les moyens 30 mémorisent l'instant de basculement t1.

Les moyens 30 imposent ensuite sur la seconde entrée de l'additionneur 52 une tension Ux+ΔU. La tension de consigne appliquée au comparateur 50 est alors U0+Ux+ΔU.

La sortie du comparateur 50 bascule à nouveau lorsque la tension aux bornes de la sonde 10 franchit à nouveau cette valeur de consigne U0+Ux+ΔU. Les moyens 30 mémorisent également l'instant t2 de franchissement de cette valeur.

Les moyens 30 connaissent ainsi le temps (t2-t1) nécessaire pour obtenir l'excursion ΔU sur la courbe de réponse de la sonde, soit la pente ΔU/(t2-t1).

Les moyens 30 peuvent ensuite réitérer cette mesure ultérieurement, en imposant sur la première entrée de l'additionneur 52 la tension U1 présente aux bornes de la sonde 10 à un instant défini, puis en appliquant successivement sur la seconde entrée de l'additionneur 52, successivement des valeurs Ux1 et ΔU1. Les moyens 30 peuvent ainsi déterminer le temps (t4-t3) nécessaire pour obtenir l'excursion ΔU1 sur la courbe de réponse de la sonde, soit la pente ΔU1/(t4-t3).

En pratique, on prendra de préférence ΔU1=ΔU et Ux=Ux1.

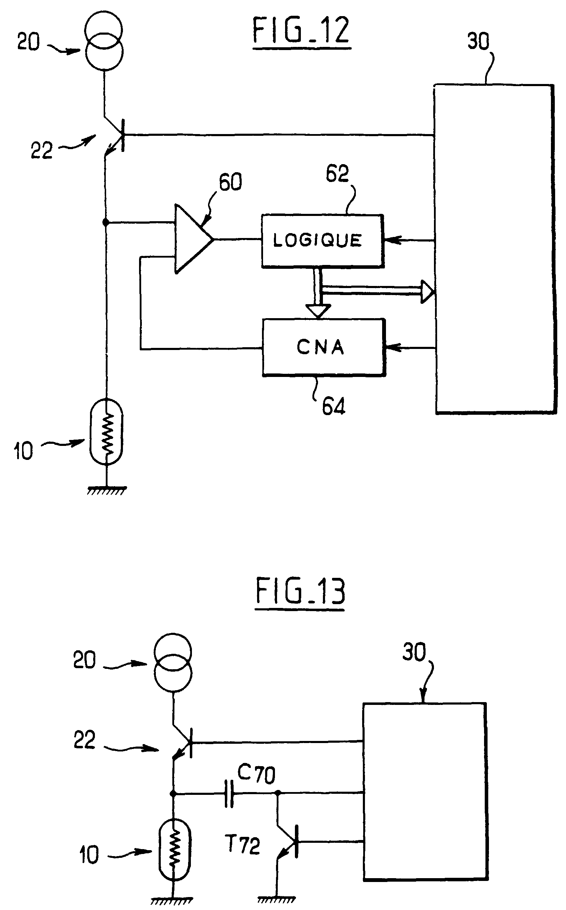

On a représenté sur la figure 11 une variante de réalisation sur laquelle on retrouve la sonde 10, la source 20, l'interrupteur 22, les moyens 30, le convertisseur A/N 32, l'additionneur 52, le convertisseur N/A 54 et le comparateur 50.

Cependant selon la figure 11, le dispositif comprend un second comparateur 56.

Ainsi le premier comparateur 50 compare la tension aux bornes de la sonde 10 à la valeur de consigne U0+Ux ou U1+Ux tandis que le second comparateur 56 compare la tension aux bornes de la sonde 10 à la valeur de consigne U0+Ux+ΔU, ou U1+Ux1+ΔU1.

Pour cela le comparateur 56 a une première entrée reliée à la sonde 10 et une seconde entrée reliée à la sortie d'un additionneur 58 ou générateur d'offset, lequel ajoute à la sortie du convertisseur 54 la valeur ΔU ou ΔU1.

Selon le mode de réalisation de la figure 11, les moyens 30 n'ont pas à modifier la valeur Ux ou Ux1 appliquée à la seconde entrée de l'additionneur 52 entre les instants de mesure t1 et t2 ou t3 et t4.

La figure 12 représente une variante de réalisation d'un convertisseur numérique/analogique. On retrouve sur la figure 12, la sonde 10, la source 20, l'interrupteur 22 et les moyens 30.

Le dispositif de la figure 12 comprend en outre un convertisseur N/A formé par un comparateur 60, une logique numérique 62, et un convertisseur numérique/analogique 64.

Le comparateur 60 compare la tension aux bornes de la sonde 10 à la tension de sortie du convertisseur 64.

La logique numérique 62 est pilotée par la sortie du comparateur 60. La logique 62 peut être formée d'un compteur numérique ou d'une logique travaillant par dichotomie, c'est-à-dire une logique qui n'évolue pas par pas fin régulier, mais qui évolue par pas grossier évolutif égal à une fraction importante, généralement la moitié de l'excursion imposée par la sortie du comparateur.

Enfin, la sortie de la logique 62 est reliée à l'entrée du convertisseur 64.

Bien entendu, il suffit d'ajouter un additionneur contrôlé par les moyens 30 entre la sortie du convertisseur 64 et l'entrée du comparateur 60 ou un autre comparateur relié par ailleurs à la sonde 10, pour autoriser la détection des instants de franchissement de ΔU prédéterminés comme indiqué en regard des figures 10 et 11.

On a représenté sur la figure 13 une autre variante de réalisation selon laquelle les tensions sont mesurées par les moyens 30, aux bornes de la sonde 10, par l'intermédiaire d'un condensateur C70 piloté par un interrupteur T72. L'interrupteur T72 formé de préférence d'un transistor est rendu temporairement conducteur pour mémoriser la tension initiale U0 aux bornes de la sonde 10.

Ainsi le signal exploité par la suite par les moyens 30 est affranchi de cette tension d'offset U0 et ne comprend que l'évolution du signal par rapport à cette tension U0 initiale.

L'homme de l'art comprendra que les moyens proposés dans le cadre de la présente invention permettent d'obtenir une mesure plus précise que les moyens décrits dans les documents antérieurs FR-A-2367276 et FR-A-2514497.

Bien entendu la présente invention n'est pas limitée aux modes de réalisation précédemment décrits mais s'étend à toutes variantes conformes à son esprit.

Ainsi par exemple, on a précédemment décrit une source d'alimentation en courant de la sonde 10. Toutefois, l'homme de l'art adaptera aisément le dispositif à une alimentation en tension.

La sonde peut également être alimentée par une quantité d'énergie connue, de préférence constante, ou par l'intermédiaire d'une résistance série, comme décrit dans le document FR-A-2514497.

De même, selon les exemples précités les points de mesure sont tous pris pendant le même créneau d'alimentation de la sonde 10. Toutefois, le dispositif peut exploiter des mesures faites sur différents créneaux d'alimentation de la sonde 10, comme schématisé sur la figure 4, en utilisant l'équation (5).

De même, les modalités d'exploitation des grandeurs différentielles par les moyens 30 ne sont pas limitées à celles précédemment décrites, mais s'étendent à toutes combinaisons de celles-ci et à toutes variantes équivalentes, tells que par exemple la comparaison , sous forme d'un rapport, d'une grandeur différentielle de tension de réponse de la sonde et d'une dérivée de celle-ci.

Par ailleurs, comme proposé antérieurement par la Demanderesse, dans le document FR-A-2514497, l'information représentative du niveau et/ou volume de liquide peut être lue dans une table prémémorisée.

## Revendications

1. Dispositif pour la détection du niveau d'un liquide du type comprenant :

   - une sonde résistive (10) partiellement immergée dans le liquide,
   - des moyens d'alimentation (20) capables d'appliquer de l'énergie électrique à ladite sonde,
   - des moyens sensibles (30) à l'une au moins des grandeurs électriques tension et courant dans la sonde, et
   - des moyens (30) pour surveiller l'évolution de ladite grandeur afin d'en déduire des informations sur le niveau de liquide,

   caractérisé par le fait que les moyens de surveillance (30) sont adaptés pour mesurer au moins deux grandeurs différentielles représentatives de l'évolution de ladite grandeur et sont adaptés pour définir le niveau de liquide, en exploitant ces deux grandeurs différentielles, à l'aide d'une relation basée sur le coefficient d'échange thermique de la sonde dans le liquide et sur le coefficient d'échange thermique de la sonde dans l'air.

2. Dispositif selon la revendication 1, caractérisé par le fait que les moyens de surveillance (30) sont des moyens numériques et qu'un convertisseur analogique/numérique 32 est intercalé entre la sonde (10) et les moyens de surveillance (30).

3. Dispositif selon l'une des revendications 1 ou 2, caractérisé par le fait que les moyens de surveillance (30) exploitent une relation de la forme :

$$(U_1 - U_0) = (\alpha'\rho^2 l^{3}/s^2 p)[(h/KH)(1-e^{-KHpt1/\gamma s}) + (l-h)(1-e^{-KApt1/\gamma s})/KA]$$

$$= (\alpha'\rho^2 l^3 l/s^2 pKA)[(x/\alpha)(1-e^{-\alpha t1/\tau}) + (1-x)(1-e^{-t1/\tau})] \tag{1}$$

Avec :

U$_0$ = tension mesurée aux bornes de la sonde (10) à l'origine to du créneau de courant,
U$_1$ = tension mesurée aux bornes de la sonde (10) à un instant t1 pendant le créneau de courant,
$\alpha'$ = coefficient de variation de la résistivité du fil de la sonde (10), avec la température,
$\rho$ = résistivité du fil de la sonde (10) à la température nominale,
I = intensité du courant issu de la source (20),
s = section du fil de la sonde (10),
p = périmètre du fil de la sonde (10),
h = hauteur immergée du fil de la sonde (10),
l = longueur totale du fil de la sonde (10),
KH = coefficient d'échange thermique du fil de la sonde (10), dans le liquide,
KA = coefficient d'échange thermique du fil de la sonde (10), dans l'air,
$\gamma$ = capacité thermique du fil de la sonde (10),
x = h/l
$\alpha$ = KH/KA
$\tau$ = $\gamma$d/4KA.

4. Dispositif selon l'une des revendications 1 à 3, caractérisé par le fait que les moyens de surveillance (30) exploitent une relation de la forme :

$$(U_2 - U_1) = (\alpha'\rho^2 l^3 l/s^2 pKA)[(x/\alpha)(e^{-\alpha t1/\tau} - e^{-\alpha t2/\tau}) + (1-x)(e^{-t1/\tau} - e^{-t2/\tau}] \tag{3}$$

dans laquelle U2 et U1 représentent des tensions consécutives mesurées aux bornes de la sonde (10).

5. Dispositif selon l'une des revendications 1 à 4, caractérisé par le fait que les moyens de surveillance (30) exploitent une relation de la forme :

$$(U_2-U_7)= (\alpha'\rho^2 l^3 l/s^2 pKA)[(x/\alpha)(1-e^{-\alpha t2/\tau})e^{-\alpha t7/\tau}+(1-x)(1-e^{-t2/\tau})e^{-t7/\tau}] \qquad (5)$$

dans laquelle U2 et U7 représentent respectivement la tension mesurée aux bornes de la sonde (10) à la fin d'un créneau d'alimentation et la tension mesurée aux bornes de la même sonde (10) au début d'un créneau consécutif d'alimentation.

6. Dispositif selon l'une des revendications 1 à 5, caractérisé par le fait que les grandeurs différentielles exploitées par les moyens de surveillance sont choisies dans le groupe comprenant :

- une différence entre deux grandeurs électriques,
- un écart de temps (t2-t1) séparant le franchissement de deux niveaux prédéfinis par la grandeur électrique,
- une dérivée $\Delta U/\Delta t$ de la grandeur électrique mesurée,
- une mesure du $\Delta t$ correspondant à l'évolution $\Delta U$ de la grandeur électrique sur un écart prédéterminé.

7. Dispositif selon l'une des revendications 1 à 6, caractérisé par le fait que les moyens de surveillance (30) exploitent les grandeurs différentielles sur la base de l'un des traitements suivants :

- un rapport entre deux grandeurs différentielles,
- une relation connue entre deux grandeurs différentielles,
- une résolution d'un système d'équations mettant en oeuvre les grandeurs différentielles.

8. Dispositif selon l'une des revendications 1 à 7, caractérisé par le fait que les moyens de surveillance (30) mesurent les tensions U0, U1 et U2 aux bornes de la sonde (10) à des instants prédéfinis t0, t1 et t2, calculent deux grandeurs différentielles (U2-U0 ; U1-U0) sur la base de ces mesures et déduisent le niveau de liquide du rapport de ces deux grandeurs différentielles.

9. Dispositif selon l'une des revendications 1 à 7, caractérisé par le fait que les moyens de surveillance (30) mesurent les instants t1, t2, t3 et t4 de franchissement de niveaux de tension prédéfinis U1, U2, U3 et U4 aux bornes de la sonde (10), tels que
(U2-U1)=K(U4-U3), K étant une grandeur connue et déduisent le niveau de liquide, de cette relation.

10. Dispositif selon la revendication 9, caractérisé par le fait que K=1.

11. Dispositif selon l'une des revendications 9 ou 10, caractérisé par le fait que U3=U1.

12. Dispositif selon l'une des revendications 1 à 7, caractérisé par le fait que les moyens de surveillance (30) exploitent des grandeurs différentielles formées par les dérivées d$\Delta U$/dt de la réponse de la sonde.

13. Dispositif selon la revendication 12, caractérisé par le fait que les dérivées sont obtenues par calcul numérique à partir du signal issu d'un convertisseur analogique/numérique (32).

14. Dispositif selon la revendication 12, caractérisé par le fait que les dérivée sont obtenues à l'aide d'un dérivateur analogique (40).

15. Dispositif selon la revendication 14, caractérisé par le fait qu'il comprend des moyens aptes à court-circuiter temporairement la capacité du dérivateur analogique (40).

16. Dispositif selon l'une des revendications 12 à 15, caractérisé par le fait que les moyens de surveillance (30) exploitent trois dérivées dont les rapports forment un système de deux équations qui permet d'obtenir l'information de niveau de liquide.

17. Dispositif selon l'une des revendications 1 à 7, caractérisé par le fait que les moyens de surveillance (30) mesurent quatre tensions U0, U1, U2 et U3 à des instants t0, t1, t2 et t3 prédéfinis, déterminent sur cette base trois grandeurs différentielles et déduisent le niveau de liquide, de ces grandeurs différentielles.

18. Dispositif selon l'une des revendications 1 à 7, caractérisé par le fait que les moyens de surveillance (30) mesurent les tensions U0, U1 et U2 à des instants prédéfinis t0, t1 et t2, déterminent sur cette base deux grandeurs différentielles qui donnent un système de deux équations et déduisent par résolution de ce système, le niveau de liquide.

19. Dispositif selon l'une des revendications 1 à 7, caractérisé par le fait que les moyens de surveillance (30) mesurent l'écart de temps correspondant à une évolution d'amplitude prédéterminée de la grandeur électrique.

20. Dispositif selon l'une des revendications 9, 12 ou 19, caractérisé par le fait que les moyens de surveillance détectent les instants de franchissement des niveaux de tension prédéfinis par détection du basculement d'un bit particulier en sortie d'un convertisseur analogique/numérique (32).

21. Dispositif selon la revendication 20, caractérisé par le fait qu'il comprend au moins un comparateur (50, 56) adapté pour comparer la tension présente aux bornes de la sonde (10) à une tension de consigne définie par les moyens de surveillance.

22. Dispositif selon la revendication 21, caractérisé par le fait que la tension de consigne est définie par addition d'une valeur déterminée (ΔU) à une valeur mémorisée de la tension détectée aux bornes de la sonde (10).

23. Dispositif selon l'une des revendications 20 ou 22, caractérisé par le fait qu'il comprend deux comparateurs (50, 56) adaptés pour comparer la tension présente aux bornes de la sonde (10) à des tensions de consignes respectives définies par les moyens de surveillance.

24. Dispositif selon l'une des revendications 1 à 23, caractérisé par le fait que les moyens d'alimentation (20) sont formés d'une source de tension.

25. Dispositif selon l'une des revendications 1 à 23, caractérisé par le fait que les moyens d'alimentation (20) sont formés d'une source de courant.

26. Dispositif selon la revendication 25, caractérisé par le fait que les moyens de surveillance (30) sont adaptés pour opérer diverses mesures au cours d'un même créneau d'alimentation.

27. Dispositif selon la revendication 25, caractérisé par le fait que les moyens de surveillance (30) sont adaptés pour opérer des mesures au cours de créneaux d'alimentation différents.

**Claims**

1. Apparatus for detecting a liquid level, the apparatus being of the type comprising:

   · a resistive probe (10) partially immersed in the liquid;
   · feed means (20) capable of applying electrical energy to said probe;
   · means (30) responsive to at least one of the electrical magnitudes of voltage and current in the probe; and
   · monitoring means (30) for monitoring variation of said magnitude in order to deduce therefrom information concerning the liquid level;

   the apparatus being characterized by the fact that the monitoring means (30) are adapted to measure at least two differential magnitudes representative of variation in said magnitude and are adapted to define the liquid level by making use of said two differential magnitudes, using a relationship based on the heat exchange coefficient of the probe in the liquid and on the heat exchange coefficient of the probe in air.

2. Apparatus according to claim 1, characterized by the fact that the monitoring means (30) are digital means and an analog-to-digital converter (32) is interposed between the probe (10) and the monitoring means (30).

3. Apparatus according to claim 1 or 2, characterized in by the fact that the monitoring means (30) make use of a relationship of the form:

$$(U_1 - U_0) = \alpha'\rho^2 I^3/s^2 p)[(h/KH)(1-e^{-KHpt1/\gamma s}) + (I-h)(1-e^{-KApt1/\gamma s})/KA]$$

$$= (\alpha'\rho^2 I^3 I/s^2 pKA)[(x/\alpha)(1-e^{-\alpha t1/\tau}) + (1-x)(1-e^{-t1/\tau})] \tag{1}$$

where:

$U_0$ = voltage measured at the terminals of the probe (10) at the origin $t_0$ of the current pulse;

$U_1$ = the voltage measured at the terminals of the probe (10) at an instant $t_1$ during the current pulse;

$\alpha'$ = the coefficient of variation in the resistivity of the wire of the probe (10) with temperature;

$p$ = the resistivity of the wire of the probe (10) at nominal temperature;

$I$ = the magnitude of the current from the source (20);

$s$ = the section of the wire of the probe (10);

$p$ = the perimeter of the wire of the probe (10);

$h$ = the immersed height of the wire of the probe (10);

$I$ = the total length of the wire of the probe (10);

$KH$ = the heat exchange coefficient of the wire of the probe (10) in the liquid;

$KA$ = the heat exchange coefficient of the wire of the probe (10) in air;

$\gamma$ = the thermal capacity of the wire of the probe (10);

$x = h/I$;

$\alpha = KH/KA$;

$\tau = \gamma d/4KA$.

4. Apparatus according to any one of claims 1 to 3, characterized by the fact that the monitoring means (30) make use of a relationship of the form:

$$(U_2-U_1)=(\alpha'\rho^2 I^3 I/s^2 pKA)[(x/\alpha)(e^{-\alpha t1/\tau}-e^{-\alpha t2/\tau}) + (1-x)(e^{-t1/\tau}-e^{-t2/\tau})] \tag{3}$$

in which $U_2$ and $U_1$ represent consecutive voltages measured at the terminals of the probe (10).

5. Apparatus according to any one of claims 1 to 4, characterized by the fact that the monitoring means (30) make use of a relationship of the form:

$$(U_2-U_7)=(\alpha'\rho^2 I^3 I/s^2 pKA)[(x/\alpha)(1-e^{-\alpha t2/\tau})e^{-\alpha t7/\tau}) + (1-x)(1-e^{-t2/\tau})e^{-t7/\tau}] \tag{5}$$

in which $U_2$ and $U_7$ represent respectively the voltage measured at the terminals of the probe (10) at the end of one feed pulse and the voltage measured at the terminals of the same probe (10) at the beginning of a consecutive feed pulse.

6. Apparatus according to any one of claims 1 to 5, characterized by the fact that the differential magnitudes used by the monitoring means are selected from the group comprising:

   - a difference between two electrical magnitudes;
   - a time difference $(t_2-t_1)$ between times when the electrical magnitude crosses two predefined levels;
   - a derivative $\Delta U/\Delta t$ of the measured electrical magnitude; and
   - a measurement of At corresponding to the electrical magnitude varying over a predetermined interval $\Delta U$.

7. Apparatus according to any one of claims 1 to 6, characterized by the fact that the monitoring means (30) make use of the differential magnitudes on the basis of processing in one of the following ways:

   - a ratio between two differential magnitudes;
   - a known relationship between two differential magnitudes; and
   - solving a system of equations involving the differential magnitudes.

8. Apparatus according to any one of claims 1 to 7, characterized by the fact that the monitoring means (30) measure

voltages $U_0$, $U_1$, and U2 at the terminals of the probe (10) at predefined instants $t_0$, $t_1$, and $t_2$, calculate two differential magnitudes ($U_2$-$U_0$; $U_1$-$U_0$) on the basis of said measurements, and deduce the liquid level from the ratio of said two differential magnitudes.

9.  Apparatus according to any one of claims 1 to 7, characterized by the fact that the monitoring means (30) measure the instants $t_1$, $t_2$, $t_3$, and $t_4$ at which predetermined voltage levels $U_1$, $U_2$, $U_3$, and $U_4$ at the terminals of the probe (10) are crossed, such that:

$$(U_2\text{-}U_1)=K(U_4\text{-}U_3),$$

where K is a known magnitude, and they deduce the liquid level from said relationship.

10. Apparatus according to claim 9, characterized by the fact that K=1.

11. Apparatus according to claim 9 or 10, characterized by the fact that $U_3$=$U_1$.

12. Apparatus according to any one of claims 1 to 7, characterized by the fact that the monitoring means (30) make use of differential magnitudes formed by the derivatives d$\Delta$U/dt of the response of the probe.

13. Apparatus according to claim 12, characterized by the fact that the derivatives are obtained by digital computation on the basis of the signal delivered by an analog-to-digital converter (32).

14. Apparatus according to claim 12, characterized by the fact that the derivatives are obtained by means of an analog differentiator (40).

15. Apparatus according to claim 14, characterized by the fact that it includes means suitable for temporarily short-circuiting the capacitance of the analog differentiator (40).

16. Apparatus according to any one of claims 12 to 15. characterized by the fact that the monitoring means (30) make use of three derivatives with the ratios therefore forming a system of two equations enabling the liquid level information to be obtained.

17. Apparatus according to any one of claims 1 to 7. characterized by the fact that that the monitoring means (30) measure four voltages $U_0$, $U_1$, $U_2$, and $U_3$ at predefined instants $t_0$, $t_1$, $t_2$, and $t_3$, determine three differential magnitudes on the basis thereof, and deduce the liquid level from said differential magnitudes.

18. Apparatus according to any one of claims 1 to 7, characterized by the fact that the monitoring means (30) measure the voltages $U_0$, $U_1$, and U2 at predefined instants $t_0$, $t_1$, and $t_2$, determine two differential magnitudes on the basis thereof giving a system of two equations, and deduce the liquid level by solving said system.

19. Apparatus according to any one of claims 1 to 7, characterized by the fact that the monitoring means (30) measure the time difference corresponding to a variation of predetermined amplitude in the electrical magnitude.

20. Apparatus according to any one of claims 9, 12, and 19, characterized by the fact that the monitoring means detect the instants at which predefined voltage levels are crossed by detecting changes in the state of a particular bit in the output from an analog-to-digital converter (32).

21. Apparatus according to claim 20, characterized by the fact that it includes at least one comparator (50, 56) adapted to compare the voltage present at the terminals of the probe (10) with a reference voltage defined by the monitoring means.

22. Apparatus according to claim 21, characterized by the fact that the reference voltage is defined by adding a determined value ($\Delta$U) to a stored value for the voltage detected at the terminals of the probe (10).

23. Apparatus according to claim 20 or 22, characterized by the fact that it includes two comparators (50, 56) adapted to compare the voltage present at the terminals of the probe (10) with respective reference voltages defined by the monitoring means.

24. Apparatus according to any one of claims 1 to 23, characterized by the fact that the feed means (20) are formed by a voltage source.

25. Apparatus according to any one of lams 1 to 23, characterized by the fact that the feed means (20) are formed by a current source.

26. Apparatus according to claim 25. characterized by the fact that the monitoring means (30) are adapted to perform various measurements during a single feed pulse.

27. Apparatus according to claim 25, characterized by the fact that monitoring means (30) are adapted to perform measurements during different feed pulses.

**Patentansprüche**

1. Vorrichtung zum Nachweis des Niveaus einer Flüssigkeit des Typs, der folgende Merkmale aufweist:

   - eine ohmsche Sonde (10), die teilweise in die Flüssigkeit eintaucht,
   - Zufuhrmittel (20), die in der Lage sind, an die Sonde elektrische Energie anzulegen,
   - Mittel (30), die auf wenigstens eine der elektrischen Größen Spannung und Strom in der Sonde empfindlich sind, und
   - Mittel (30), um die Entwicklung dieser Größe zu kontrollieren, um daraus Informationen über das Flüssigkeitsniveau abzuleiten,

   dadurch gekennzeichnet, daß die Kontrollmittel (30) zum Messen von wenigstens zwei differentiellen Größen geeignet sind, die stellvertretend für die Entwicklung dieser Größe stehen und zur Definition des Flüssigkeitsniveaus geeignet sind, indem diese beiden differentiellen Größen mit Hilfe einer Beziehung auf der Grundlage des Wärmeaustauschkoeffizienten der Sonde in der Flüssigkeit und auf der Grundlage des Wärmeaustauschkoeffizienten der Sonde an Luft ausgenutzt werden.

2. Vorrichtung nach Anspruch 1, dadurch gekennzeichnet, daß die Kontrollmittel (30) digitale Mittel sind und daß ein Analog/Digital-Wandler 32 zwischen die Sonde (10) und die Kontrollmittel (30) geschaltet ist.

3. Vorrichtung nach einem der Ansprüche 1 oder 2, dadurch gekennzeichnet, daß die Kontrollmittel (30) eine Beziehung der Form:

$$(U_1-U_0) = (\alpha'\rho^2 l^3/s^2 p)[(h/KH)(1-e^{-KHpt1/\gamma s})+(1-h)\ (1-e^{-KAPt1/\gamma s})/KA] =$$

$$(\alpha'\rho^2 l^3/s^2 pKA)[(x/\alpha)(1-e^{\alpha t1/\tau})+(1-x)(1-e^{-t1/\tau}))] \tag{1}$$

ausnutzen, worin

$U_0 =$ an den Anschlußklemmen der Sonde (10) gemessene Spannung am Ursprung $t_0$ des Rechteckimpulses des Stroms,
$U_1 =$ an den Anschlußklemmen der Sonde (10) gemessene Spannung zu einem Zeitpunkt $t_1$ während des Rechteckimpulses des Stroms,
$\alpha' =$ Variationskoeffizient des spezifischen Widerstandes des Drahtes der Sonde (10) mit der Temperatur,
$\rho =$ spezifischer Widerstand des Drahtes der Sonde (10) bei einer Nenntemperatur,
$I =$ Intensität des von der Quelle (20) abgegebenen Stroms,
$s =$ Querschnitt des Drahtes der Sonde (10),
$p =$ Umfang des Drahtes der Sonde (10),
$h =$ Eintauchhöhe des Drahtes der Sonde (10),
$l =$ Gesamtlänge des Drahtes der Sonde (10),
$KH =$ Wärmeaustauschkoeffizient des Drahtes der Sonde (10) in der Flüssigkeit,
$KA =$ Wärmeaustauschkoeffizient des Drahtes der Sonde (10) an Luft,
$\gamma =$ Wärmekapazität des Drahtes der Sonde (10),

x =    h/l

$\alpha$ =    KH/KA

$\tau$ =    $\gamma$d/4KA.

4. Vorrichtung nach einem der Ansprüche 1 bis 3, dadurch gekennzeichnet, daß die Kontrollmittel (30) eine Beziehung der folgenden Form ausnutzen:

$$(U_2-U_1) = (\alpha'\rho^2 l^3 l/s^2 pKA)[(x/\alpha)(e^{-\alpha t1/\tau}-e^{-\alpha t2/\tau}) + (1-x)(e^{-t1/\tau}-e^{-t2/\tau})] \qquad (3)$$

worin U2 und U1 aufeinanderfolgende Spannungen sind, die an den Anschlußklemmen der Sonde (10) gemessen werden.

5. Vorrichtung nach einem der Ansprüche 1 bis 4, dadurch gekennzeichnet, daß die Kontrollmittel (30) eine Beziehung der folgenden Form ausnutzen:

$$(U_2-U_7) = (\alpha'\rho^2 l^3 l/s^2 pKA) [(x/\alpha)(1-e^{-\alpha t2/\tau})e^{-\alpha t7/\tau} + (1-x)(1-e^{-t2/\tau})e^{-t7/\tau}] \qquad (5)$$

worin U2 bzw. U7 die Spannung darstellt, die an den Anschlußklemmen der Sonde (10) am Ende eines angelegten Rechteckimpulses gemessen wird, bzw. die Spannung, die an den Anschlußklemmen derselben Sonde (10) zu Beginn eines angelegten darauffolgenden Rechteckimpulses gemessen wird.

6. Vorrichtung nach einem der Ansprüche 1 bis 5, dadurch gekennzeichnet, daß die von den Kontrollmitteln ausgenutzten differentiellen Größen aus der Gruppe ausgewählt werden, die umfaßt:

   - eine Differenz zwischen zwei elektrischen Größen,
   - eine Zeitspanne ($t_2-t_1$), die das Überschreiten zweier zuvor festgelegter Niveaus durch die elektrische Größe trennt,
   - eine Ableitung $\Delta U/\Delta t$ der gemessenen elektrischen Größe,
   - ein Maß für $\Delta t$, das der Entwicklung $\Delta U$ der elektrischen Größe während einer zuvor festgelegten Zeitspanne entspricht.

7. Vorrichtung nach einem der Ansprüche 1 bis 6, dadurch gekennzeichnet, daß die Kontrollmittel (30) die differentiellen Größen auf der Grundlage von einer der folgenden Behandlungen ausnutzen:

   - einer Beziehung zwischen zwei differentiellen Größen,
   - einer Relation, die zwischen den beiden differentiellen Größen bekannt ist,
   - einer Lösung eines Systems von Gleichungen, die die differentiellen Größen verwenden.

8. Vorrichtung nach einem der Ansprüche 1 bis 7, dadurch gekennzeichnet, daß die Kontrollmittel (30) die Spannungen U0, U1 und U2 an den Anschlußklemmen der Sonde (10) zu zuvor festgelegten Zeitpunkten t0, tl und t2 messen, zwei differentielle Größen (U2-U0; U1-U0) auf der Grundlage dieser Messungen berechnen und das Flüssigkeitsniveau aus der Beziehung der beiden differentiellen Größen ableiten.

9. Vorrichtung nach einem der Ansprüche 1 bis 7, dadurch gekennzeichnet, daß die Kontrollmittel (30) die Zeitpunkte tl, t2, t3 und t4 des Überschreitens von zuvor festgelegten Spannungsniveaus U1, U2, U3 und U4 an den Anschlußklemmen der Sonde (10), wie (U2-U1)=K(U4-U3), messen, wobei K eine bekannte Größe ist, und daß sie das Flüssigkeitsniveau aus dieser Beziehung ableiten.

10. Vorrichtung nach Anspruch 9, dadurch gekennzeichnet, daß K=1 ist.

11. Vorrichtung nach einem der Ansprüche 9 oder 10, dadurch gekennzeichnet, daß U3=U1 ist.

12. Vorrichtung nach einem der Ansprüche 1 bis 7, dadurch gekennzeichnet, daß die Kontrollmittel (30) die differentiellen Größen ausnutzen, die durch die Ableitungen d$\Delta$U/dt aus der Reaktion der Sonde gebildet sind.

**13.** Vorrichtung nach Anspruch 12, dadurch gekennzeichnet, daß die Ableitungen durch die numerische Berechnung ausgehend von dem Signal erhalten werden, welches von einem Analog/Digital-Wandler (32) stammt.

**14.** Vorrichtung nach Anspruch 12, dadurch gekennzeichnet, daß die Ableitungen mit Hilfe eines Analog-Differenzierers (40) erhalten werden.

**15.** Vorrichtung nach Anspruch 14, dadurch gekennzeichnet, daß sie Mittel umfaßt, die geeignet sind, die Kapazität des Analog-Differenzierers (40) zeitweise kurzzuschließen.

**16.** Vorrichtung nach einem der Ansprüche 12 bis 15, dadurch gekennzeichnet, daß die Kontrollmittel (30) drei Ableitungen ausnutzen, deren Beziehungen ein System von zwei Gleichungen bilden, das den Erhalt der Information über das Flüssigkeitsniveau erlaubt.

**17.** Vorrichtung nach einem der Ansprüche 1 bis 7, dadurch gekennzeichnet, daß die Kontrollmittel (30) vier Spannungen U0, U1, U2 und U3 zu den zuvor festgelegten Zeiten t0, tl, t2 und t3 messen, auf dieser Grundlage drei differentielle Größen bestimmen und das Flüssigkeitsniveau aus diesen differentiellen Größen ableiten.

**18.** Vorrichtung nach einem der Ansprüche 1 bis 7, dadurch gekennzeichnet, daß die Kontrollmittel (30) die Spannungen U0, U1 und U2 zu den zuvor festgelegten Zeitpunkten t0, t1 und t2 messen, auf dieser Grundlage zwei differentielle Größen bestimmen, die ein System von zwei Gleichungen ergeben, und durch Lösen dieses Systems das Flüssigkeitsniveau ableiten.

**19.** Vorrichtung nach einem der Ansprüche 1 bis 7, dadurch gekennzeichnet, daß die Kontrollmittel (30) die Zeitspanne messen, die einer zuvor bestimmten Amplitudenentwicklung der elektrischen Größe entspricht.

**20.** Vorrichtung nach einem der Ansprüche 9, 12 oder 19, dadurch gekennzeichnet, daß die Überwachungsmittel die Zeitpunkte des Überschreitens der zuvor festgelegten Spannungsniveaus anzeigen, indem das Kippen eines bestimmten Bits zum Ausgang eines Analog/Digital-Wandlers (32) angezeigt wird.

**21.** Vorrichtung nach Anspruch 20, dadurch gekennzeichnet, daß sie wenigstens einen Komparator (50, 56) umfaßt, der zum Vergleichen der Spannung, die an den Anschlußklemmen der Sonde (10) anliegt, mit einer von den Kontrollmitteln definierten Sollspannung geeignet ist.

**22.** Vorrichtung nach Anspruch 21, dadurch gekennzeichnet, daß die Sollspannung definiert ist durch Addition eines bestimmten Wertes ($\Delta$U) zu einem gespeicherten Wert der Spannung, die an den Anschlußklemmen der Sonde (10) nachgewiesen wird.

**23.** Vorrichtung nach einem der Ansprüche 20 oder 22, dadurch gekennzeichnet, daß sie zwei Komparatoren (50, 56) umfaßt, die zum Vergleich der an den Anschlußklemmen der Sonde (10) anliegenden Spannung mit entsprechenden Soll-Spannungen, die von den Kontrollmitteln definiert sind, geeignet sind.

**24.** Vorrichtung nach einem der Ansprüche 1 bis 23, dadurch gekennzeichnet, daß die Zufuhrmittel (20) von einer Spannungsquelle gebildet werden.

**25.** Vorrichtung nach einem der Ansprüche 1 bis 23, dadurch gekennzeichnet, daß die Zufuhrmittel (20) von einer Stromquelle gebildet werden.

**26.** Vorrichtung nach Anspruch 25, dadurch gekennzeichnet, daß die Kontrollmittel (30) geeignet sind, um im Verlaufe desselben Zufuhrimpulses verschiedene Messungen vorzunehmen.

**27.** Vorrichtung nach Anspruch 25, dadurch gekennzeichnet, daß die Kontrollmittel (30) geeignet sind, um im Verlaufe von unterschiedlichen Zufuhrimpulsen Messungen vorzunehmen.

## FIG.1 : Etat de la Technique

## FIG_2

FIG. 3A

REPONSE DE
LA SONDE 10

U2

U1

U0

t0    t1    t2

FIG. 3B

CRENEAU
DE COURANT

FIG. 4A

REPONSE
DE LA
SONDE 10

U2

U1
U7

U0

t0    t1    t2  t7

FIG. 4B

CRENEAU
DE COURANT

# FIG.5

# FIG.7

INITIALISATION DE LA MESURE — 300

EVOLUTION D'UN BIT DE REFERENCE EN SORTIE DU CAN — 302

NON / OUI

MESURE DU TEMPS $t_1$ ET INITIALISATION BOUCLE DE COMPTAGE DU TEMPS $T_{21}$ — 304

EVOLUTION DU BIT DE REFERENCE — 306

NON / OUI

MESURE DU TEMPS $t_2$ ET DE $T_{21}$ — 308

TEMPORISATION — 310

EVOLUTION DU BIT DE REFERENCE — 312

OUI

MESURE DU TEMPS $t_3$ ET INITIALISATION BOUCLE DE COMPTAGE DU TEMPS $T_{43}$ — 314

EVOLUTION DU BIT DE REFERENCE — 316

NON / OUI

MESURE DU TEMPS $t_4$ ET DE $T_{43}$ — 318

CALCUL DE $x$ SUR LA BASE DE $(U_4 - U_3) = (U_2 - U_1)$ — 320

$$\underline{FIG\_6}$$

FIG.8

FIG.9

## FIG. 10

20

22

30

50

54 CNA

52 +

CAN

32

10

## FIG. 11

20

22

30

56

58

50

54 CNA

52 +

CAN

32

10

## FIG.12

## FIG.13